# EUROPÄISCHE PATENTSCHRIFT

(11) **EP 3 319 741 B1**
(45) Veröffentlichungstag und Bekanntmachung des Hinweises auf die Patenterteilung: **11.12.2019**
(21) Anmeldenummer: 16734382.1
(22) Anmeldetag: 01.07.2016
(51) Int. Cl.: B21B 45/00

(54) **WÄRMEDÄMMVORRICHTUNG**
HEAT INSULATING DEVICE
DISPOSITIF D'ISOLATION THERMIQUE

(30) Priorität: 10.07.2015 DE 102015212976
(43) Veröffentlichungstag der Anmeldung: 16.05.2018
(73) Patentinhaber: SMS Group GmbH, 40237 Düsseldorf (DE)
(72) Erfinder: SEIDEL, Jürgen, 57223 Kreuztal (DE); ANDERS, Denis, 57250 Netphen (DE)
(74) Vertreter: Klüppel, Walter
(86) Internationale Anmeldenummer: PCT/EP2016/065608
(87) Internationale Veröffentlichungsnummer: WO 2017/009074

(56) Entgegenhaltungen:
- EP-A2- 0 468 716
- JP-A- H02 147 113
- JP-A- S61 180 608
- GINZBURG V B ET AL: "HEAT CONSERVATION BETWEEN ROUGHING AND FINISHING TRAINS OF HOT STRIP MILLS", AISE STEEL TECHNOLOGY, AISE, PITTSBURG, PA, US, Bd. 63, Nr. 4, 1. April 1986 (1986-04-01), Seiten 29-39, XP002063816, ISSN: 0021-1559

## Beschreibung

Die Erfindung betrifft eine Wärmedämmvorrichtung zur Wärmedämmung eines metallischen Guts in einem Walzwerk, umfassend ein Trägerelement, an dem eine Anzahl an Wärmedämmelementen angeordnet ist.

Wärmedämmvorrichtungen dieser Art sind im Stand der Technik bekannt. In der Praxis sind Wärmedämmhauben zur Verminderung von Temperaturverlusten an Warmband oder Brammen seit langem bekannt. Wie eine Dämmhaubeneinheit im Bereich eines Rollgangs einer Warmbandstraße ausgeführt ist, zeigt beispielsweise die EP 0 468 716 A2. Auf der warmen Seite der Hauben sind hier Keramikfasern angeordnet. Die EP 0 059 093 B1 offenbart Wärmehaubentypen bestehend aus einem Kern aus wärmeisolierendem Material (Keramikfasern) und einer außen auf der Warmseite angebrachten dünnen Wand, die eine Metallmembrane aus einem hitzebeständigen Werkstoff bildet. Eine prinzipiell ähnliche Konstruktion offenbart die US 4 595 358 A, hier jedoch mit einem speziell geformten Dämmmaterial sowie Membranblechen. Die EP 0 248 674 A1 offenbart eine Wärmedämmhaube bestehend aus mehreren Dämmmaterialschichten. Weitere Lösungen offenbaren die DE 10 2013 219 507 A1, die RU 2 487 769, die US 5 101 652, die WO 2010/077177 A1 und die US 4 524 702.

Die Haltbarkeit der Membranbleche der Wärmedämmhauben ist begrenzt. Dies liegt an den teilweise hohen Temperaturspannungen beispielsweise infolge mechanischer Zwänge, die auf die Membranbleche bei ungünstiger Aufhängung bzw. zu großer Membranblecheinheiten einwirken.

Weiterhin sind die Dämmhaubeneinheiten bzw. die Membranbleche zumeist in einer Anlage gleich ausgeführt. Eine Anpassung beispielsweise über die Breite der Anlage und/oder an die unterschiedlichen Temperaturdifferenzen in den verschiedenen Bereichen wird im Stand der Technik nicht berücksichtigt. Auch eine Anpassung der Membran-Blechdicke an das Temperaturniveau und/oder an die Dauer der thermischen Belastung der Dämmhaubenmembranen innerhalb einer Anlage findet nicht statt.

Infolge der nicht optimalen Konstruktion im Stand der Technik sind die Wartungsaufwendungen für so ausgeführte Dämmhaubeneinheiten hoch.

Die JP H02 147113 A offenbart eine Wärmedämmvorrichtung zur Wärmedämmung eines metallischen Guts in einem Walzwerk, umfassend ein Trägerelement, an dem eine Anzahl an Wärmedämmelementen angeordnet ist, wobei zumindest ein Wärmedämmelement durch mehrere Seitenteile gebildet wird, die in sich einen Aufnahmeraum für ein Wärmedämmmaterial einschließen.

Der Erfindung liegt die Aufgabe zugrunde, eine gattungsgemäße Wärmedämmvorrichtung so fortzubilden, dass eine Verlängerung der Lebensdauer der Vorrichtung gegeben ist. Ferner sollen die Instandhaltungs- und Wartungsaufwendungen minimiert werden. Schließlich soll eine optimale Anpassung von Wärmedämmelementen an die Gegebenheiten eines Anwendungsfalls leicht möglich sein.

Die Lösung dieser Aufgabe durch die Erfindung ist dadurch gekennzeichnet, dass zumindest ein Wärmedämmelement durch mehrere Seitenteile gebildet wird, die in sich einen Aufnahmeraum für ein Wärmedämmmaterial einschließen, wobei zumindest zwei der Seitenteile an ihren zusammenstoßenden Seitenbereichen mit einer scharnierartigen Verbindung miteinander verbunden sind.

Die scharnierartige Verbindung kann durch eine Anzahl an Scharnieren gebildet werden, die entlang der zusammenstoßenden Seitenbereiche angeordnet sind. In diesem Falle ist bevorzugt vorgesehen, dass eine Scharnier-Teillänge maximal das 10-fache des Scharnier-Durchmessers beträgt.

Die scharnierartige Verbindung kann auch durch mindestens einen wendelförmigen Draht gebildet werden, der in Bohrungen eingefädelt ist, die entlang der zusammenstoßenden Seitenbereiche eingebracht sind.

Eine alternative Ausgestaltung sieht vor, dass die scharnierartige Verbindung durch eine zumindest abschnittsweise Schwächung der mechanischen Steifigkeit, insbesondere der Biegesteifigkeit, zumindest eines Seitenteils gebildet wird. Dabei kann besagte Schwächung durch mindestens eine Ausnehmung im Seitenteil hergestellt sein. Die Schwächung kann auch durch das Zusammensetzen des Seitenteils durch mindestens zwei separate und miteinander verbundene Seitenteilabschnitte hergestellt sein.

Demgemäß kann der scharnierartige Effekt durch gezielte Schwächung insbesondere der Längsseitenbleche durch Anbringen von Aussparungen, durch Einsatz eines dünneren Zwischenblechs oder durch eine spielbehaftete Verbindungen der Bleche oder auch durch eine Kombination obiger Maßnahmen erzeugt werden.

Die scharnierartige Verbindung kann schließlich nach einer weiteren Alternative durch Abschnitte der Seitenbereiche und Ausnehmungen in den Seitenbereichen gebildet werden, wobei deformierte Abschnitte in Ausnehmungen im Bereich der zusammenstoßenden Seitenbereiche gesteckt sind.

Die Seitenteile werden bevorzugt durch Metallbleche gebildet.

Das Wärmedämmmaterial wird bevorzugt zumindest teilweise durch Keramikfasern gebildet.

Eine Anzahl von Wärmedämmelementen kann sowohl in Richtung quer zur Förderrichtung des metallischen Guts als auch in Förderrichtung des metallischen Guts angeordnet sein.

Bevorzugt weist mindestens ein Wärmedämmelement - in Förderrichtung des metallischen Guts gesehen - eine quadratische, rechteckige oder trapezförmige Gestalt auf.

Vorgesehen kann weiter werden, dass mehrere in Richtung quer zur Förderrichtung des metallischen Guts nebeneinander angeordnete Wärmedämmelemente vorhanden sind, wobei mindestens zwei benachbarte Wärmedämmelemente ein gemeinsames Seitenteil haben.

Weiterhin können mehrere in Richtung quer zur Förderrichtung des metallischen Guts nebeneinander angeordnete Wärmedämmelemente von einer Stange durchsetzt werden. Die Stange durchsetzt hierbei bevorzugt seitliche, sich in vertikaler Richtung erstreckende Abschnitte des Trägerelements und ist hier mit Befestigungselementen, beispielsweise mit Schrauben, befestigt.

Weiterhin kann vorgesehen sein, dass ein vertikaler Spalt zwischen den Wärmedämmelementen und dem Trägerelement vorhanden ist, der vorzugsweise maximal 30 mm breit ist. Der Spalt kann auch zumindest teilweise mit Dämmwolle ausgefüllt sein, vorzugsweise mit bioverträglichen Keramikfasern. Bei Anordnung von Dämmwolle im Spalt beträgt die Erstreckung des Spalts in vertikaler Richtung vorzugsweise maximal 100 mm. Der Spalt kann auch in vertikaler Richtung von einer Anzahl Abstandsbolzen durchsetzt sein, die am Trägerelement und am Wärmedämmelement befestigt sind.

Die Blechdicke der Seitenteile kann ferner zumindest teilweise unterschiedlich sein, wobei insbesondere die sich in Förderrichtung erstreckenden Seitenteile dicker sind als die Seitenteile, auf denen die Förderrichtung senkrecht steht (also die Stirnseiten der Wärmedämmelemente).

Die Wärmedämmelemente können in Querrichtung zumindest teilweise unterschiedlich breit ausgebildet sein.

Ferner ist es möglich, dass in Förderrichtung mindestens zwei Wärmedämmelemente aufeinander folgend angeordnet sind, wobei die beiden in Förderrichtung aufeinander folgenden Wärmedämmelemente korrespondierende Seitenteile aufweisen, die unterschiedlich dick ausgebildet sind.

Demgemäß kann vorgesehen sein, dass ein Wärmedämmelement mit unterschiedlichen Metallblechdicken insbesondere für die Heißseitenbleche im Vergleich zu den Längs- und Kopfseitenbleche eingesetzt werden, wobei insbesondere und bevorzugt die Längs- und Kopfseitenbleche dünner ausgeführt sind. Über der Anlagenlänge in Förderrichtung können demgemäß abhängig von der erwarteten maximalen Membranblechtemperatur die Dämmelemente mit unterschiedlichen Metallblechdicken insbesondere an der Heißseite ausgeführt werden.

Die Dämmelemente sind dabei bevorzugt so ausgeführt, dass die Ober- und Unterseiten eines Elementes wahlweise auf der Heißseite angeordnet können, was durch die Möglichkeit für ein entsprechendes Drehen beinhaltet.

Weiterhin kann vorgesehen sein, dass innerhalb einer Anlage in Förderrichtung Dämmelemente mit Metallblechverkleidung, Dämmelemente ohne Metallblechverkleidung (d. h. mit Keramikfasern auf der Heißseite) und/oder Dämmelemente, die als Spiegel ausgeführt sind, kombiniert werden.

Die Erfindung stellt also auf den Einsatz von flexibel beweglichen Verbindungen benachbarter Bleche (Metallmembranen) des Wärmedämmelements ab, wodurch Temperaturspannungen wesentlich vermindert werden können.

Die vorgeschlagene Lösung kommt bevorzugt bei Warmbreitbandstraßen zum Einsatz, wo die beschriebene Vorrichtung nach Art einer Wärmedämmhaube ausgebildet ist.

Die vorgeschlagene Ausgestaltung erzielt eine verbesserte thermische Isolation der Wärmedämmhaube und eine Verlängerung der Lebensdauer der Vorrichtung. Demgemäß wird die Lebensdauer insbesondere der zum Einsatz kommenden Bleche (Metallmembranen) erhöht und damit die Wartungsintensität der Dämmhaube verringert.

Die Temperaturspannungen in den Membranblechen sowie in den Seitenblechen der Wärmedämmelemente können durch die vorgeschlagene Konstruktion vermindert werden, wodurch sich die Standzeit der Bleche erhöht. Hierdurch kann der Dämmeffekt optimiert und die Standzeit durch eine geeignete Wahl der Membranblechdicke und Dämmelementbreite erhöht werden.

Somit wird eine pendelnde bzw. frei translatorisch bewegbare und drehbare Anbindung der Metallmembranen (Seitenteile) an der Oberseite (Heißseite) und an den Seitenflächen eines Wärmedämmelements möglich. Diese bewegliche, pendelnde Anbindung an den Seitenteilkanten erfolgt durch Verwendung einer scharnierartigen Verbindung, die eine flexible bewegliche Verbindung zweier Nachbarbleche ermöglichen.

Vorteilhaft ist ebenfalls, wenn die Wärmedämmelemente drehbar (d.h. austauschbar betreffend ihre Oberseite) eingesetzt werden können, d.h. die jeweiligen Oberflächenseiten können wahlweise als Heißseite fungieren.

Vorteilhaft werden unterschiedlich breite Wärmedämmelemente über der Breite der Wärmedämmvorrichtung eingesetzt.

Weiterhin ist eine Anpassung an das Oberflächentemperaturniveau der Metallmembrane bzw. an die Bandtemperatur und der entsprechenden Heizdauer durch entsprechende Ausführung der Wärmedämmelemente möglich.

Insbesondere können Dämmhauben mit dünnem Membranblech und/oder Dämmhauben ohne Membranblech und/oder Spiegel-Dämmhauben mit Dämmhauben mit dickeren Membranblechen innerhalb einer Anlage kombiniert werden.

In der Zeichnung sind Ausführungsbeispiele der Erfindung dargestellt.
- Fig. 1: zeigt schematisch eine Wärmedämmvorrichtung, gesehen in Förderrichtung des thermisch abzuschirmenden metallischen Guts, wobei unterhalb der Wärmedämmvorrichtung zwei Brammen angedeutet sind,
- Fig. 2: zeigt in perspektivischer Darstellung zwei Ausführungsformen eines Wärmedämmelements der Wärmedämmvorrichtung,
- Fig. 3: zeigt schematisch die Wärmedämmvorrichtung mit zwei dargestellten Wärmedämmelementen, gesehen in Förderrichtung des thermisch abzuschirmenden metallischen Guts,
- Fig. 4: zeigt in der Darstellung gemäß Fig. 3 eine Variante der Wärmedämmvorrichtung,
- Fig. 5: zeigt schematisch eine weitere Variante der Wärmedämmvorrichtung, gesehen in Förderrichtung des thermisch abzuschirmenden metallischen Guts,
- Fig. 6: zeigt schematisch die Ausstattung einer Wärmedämmvorrichtung, wobei Wärmedämmelemente mit unterschiedlichen Dicken der zum Einsatz kommenden Bleche ausgestattet sind.
- Fig. 7a: zeigt ein Wärmedämmelement gesehen in Förderrichtung gemäß einer weiteren Ausführungsform der Erfindung,
- Fig. 7b: zeigt die zu Fig. 7a zugehörige Seitenansicht,
- Fig. 8a: zeigt ein Wärmedämmelement gesehen in Förderrichtung gemäß einer weiteren Ausführungsform der Erfindung und
- Fig. 8b: zeigt die zu Fig. 8a zugehörige Seitenansicht.

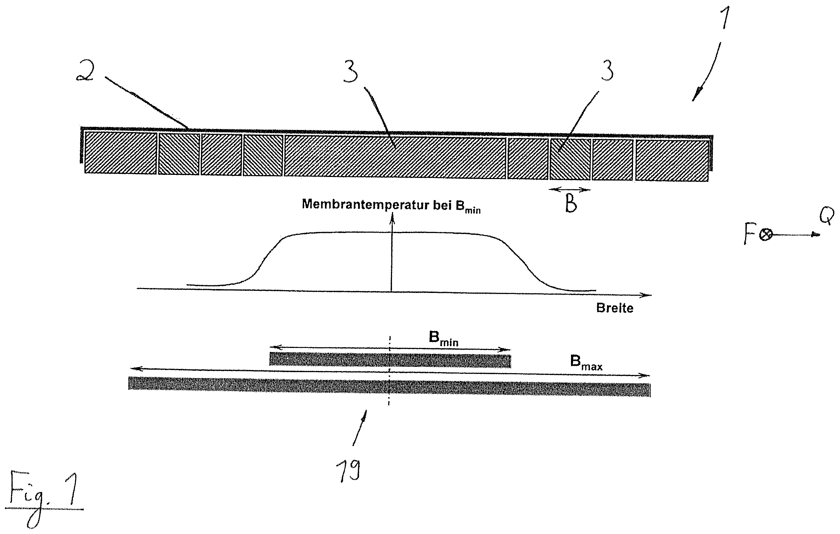

In Fig. 1 ist eine Wärmedämmvorrichtung 1 zu sehen, die ein Trägerelement 2 aufweist, an dem eine Anzahl Wärmedämmelemente 3 angeordnet ist. Die Breite eines Wärmedämmelements 3 ist mit B angegeben, und zwar in horizontaler Richtung Q quer zur Förderrichtung F des zu fördernden Bandes bzw. der zu fördernden Bramme 19. Maximale und minimale Werte für die Breite der thermisch zu isolierenden Bramme bzw. des Bandes sind mit Bₘᵢₙ und Bₘₐₓ angegeben.

Die Breite der Dämmhaubenelemente 3 quer zur Transportrichtung (Förderrichtung F) bestimmt die Temperaturdifferenz innerhalb des Elements und damit das Niveau der Temperaturspannungen im Membranblech (hierunter ist das dem Band oder der Bramme zugewandte Seitenblech der Wärmedämmelemente 3 zu verstehen, s. unten). Deshalb ist eine möglichst schmale Elementbreite zu bevorzugen. Auf der anderen Seite sind viele kleine Dämmhaubenelemente aufwendiger in der Herstellung. Deshalb werden bevorzugt nur dort schmale Elemente eingesetzt, wo es sinnvoll ist, um die Lebensdauer zu steigern. Dies liegt im Bereich von ca. 90 % der minimalen bis zur maximalen Bandbreite, d.h. der Bereich, in dem die Bandkanten zu erwarten sind. Bereiche in der Mitte des Rollgangs unterhalb der Minimalbreite der Bramme bzw. des Bandes sowie eventuell Bereiche außen am Rand können breiter ausgeführt werden.

Die minimale Dämmhaubenelementbreite in den Bandkantenbereichen ist abhängig von dem Abstand zwischen Band bzw. Bramme zur Metallmembrane der Wärmedämmelemente und dem zu erwartenden maximalen Temperaturniveau der Haube oder von der Band- bzw. Brammentemperatur und Belastungszeit und wird bei der Gestaltung der Dämmhaubenstrecke festgelegt.

Je dichter beispielsweise die Haube vor dem Band bzw. der Bramme positioniert ist, desto steiler ist der Temperaturübergang und desto schmaler ist das Element auszuführen. Eine minimale Dämmelementbreite von weniger als 200 mm ist zu bevorzugen. Eine so optimierte Dämmhaubenanordnung über der Breite ist deshalb vorteilhaft.

Wie in Fig. 1 zu sehen ist, kommt vorliegend in der Mitte der Wärmedämmvorrichtung 1 ein relativ breites Wärmedämmelement 3 zum Einsatz, während zu den Seiten hin reduzierte Breiten der Dämmelemente vorgesehen sind. Je dichter beispielsweise die Wärmedämmvorrichtung 1 vor der Bramme 19 positioniert ist, desto steiler ist der Temperaturübergang und desto schmaler ist das Wärmedämmelement 3 auszuführen. Dies geht aus Fig. 1 aus dem Verlauf der Membrantemperatur in der Bildmitte hervor, die über Richtung Q aufgezeichnet ist, und zwar im Falle einer Bramme 19 mit minimaler Breite Bₘᵢₙ.

Unten in Fig. 1 sind die minimalen und maximalen Breiten der Bramme bzw. des Blechs 19 angedeutet, die in der vorliegenden Anlage verarbeitet werden.

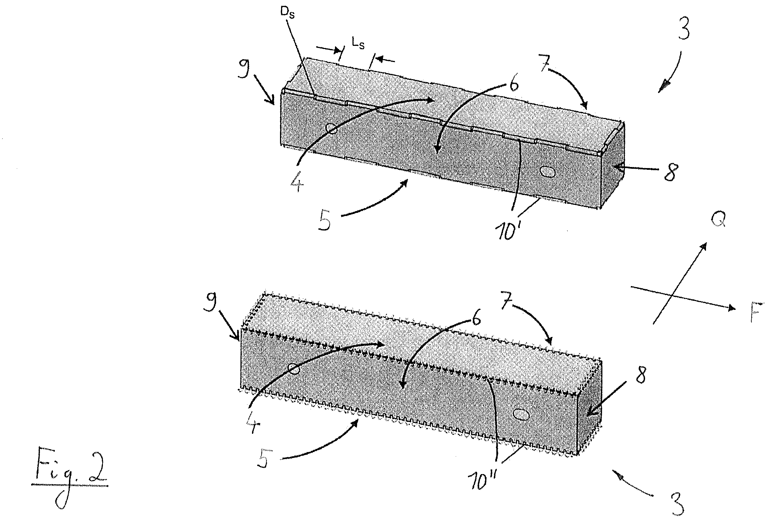

In Fig. 2 sind Ausführungsbeispiele schmaler quaderförmige Wärmedämmelemente 3 zu sehen, die am Trägerelement 2 angeordnet sind.

Wie zu erkennen, wird das Wärmedämmelement 3 durch mehrere Seitenteile 4, 5, 6, 7, 8, 9 gebildet, die in sich einen Aufnahmeraum für ein Wärmedämmmaterial einschließen (die stirnseitigen Bleche 8 und 9 sind nicht zwingend), wobei zumindest zwei der Seitenteile 4, 5, 6, 7 an ihren zusammenstoßenden Seitenbereichen mit einer scharnierartigen Verbindung 10 miteinander verbunden sind.

In einer Wärmedämmvorrichtung 1 werden mehrere dieser Wärmedämmelemente 3 nebeneinander und hintereinander angeordnet. Das Wärmedämmelement 3 kann im Schnitt mit Blick in Förderrichtung F quadratisch, rechteckig oder auch trapezförmig sein sowie als Schiefeck oder ähnlich ausgeführt. Weiterhin ist vorteilhafter Weise vorgesehen, dass die Wärmedämmelemente 3 drehbar eingesetzt werden können, d.h. die Seitenteile 4 oder 5 können beide wahlweise der Heißseite zugewandt werden bzw. als Heißseite fungieren. Hierdurch steigt die Flexibilität und der Nutzungsgrad eines Elements 3, d.h. es kann nach Ausfall der einen Seite (zum Beispiel infolge eine Beschädigung) nach dem Drehen nochmals bzw. doppelt so lange verwendet werden, bis es endgültig ausgetauscht wird.

Neben der im Zusammenhang mit Fig. 1 erwähnten Breite des Dämmelements 3 ist die möglichst zwangsfreie Aufhängung bzw. Anbindung der Membrane (d. h. der Seitenteile) an das Trägerelement 2 für die Lebensdauer der Gesamtvorrichtung wichtig. Besonders vorteilhaft ist eine pendelnde bzw. flexible Anbindung der Membrane auf der Heißseite sowie der Längsseitenflächen (Seitenteil 6 und 7). Die Heißseite (Seitenteil 5 bzw. nach einem Wenden des Elements 3 Seitenteil 4) kann sich frei ausdehnen und die Längsseitenflächen (Seitenteil 6 und 7) können in einem vorgegebenen Bereich frei pendeln und tragen die Heißseite. Die pendelnde bzw. flexible Anbindung wird durch die genannte scharnierartige Verbindung 10 bewerkstelligt.

In den beiden in Fig. 2 zu sehenden Ausführungsbeispielen kommen im oberen Falle Scharniere 10' und im unteren Falle wendelförmige Drähte 10 " zum Einsatz. Weitere Alternativen sind beispielsweise eine ineinandergesteckte und deformierte Blechaussparung im Nachbarblech oder eine ähnlich wirkende Drehverbindung, die eine flexible bewegliche Verbindung zweier Nachbarbleche ermöglicht.

Um die Ausdehnung der Seitenteile (Membranbleche) auf der Heißseite weniger zu behindern, ist auch eine unterschiedliche, vorzugsweise geringere Membran-Blechdicke für die Längs- und die Kopfseitenbleche (Seitenteil 6, 7, 8 und 9) im Vergleich zu den Seitenteilen 4 und 5 alternativ vorgesehen.

Aus Gründen der Temperaturspannung sind bevorzugt die Scharnier-Teillängen L_{S} relativ kurz ausgeführt (s. Fig. 2 oben). Eine Scharnier-Teillänge L_{S} sollte das Zehnfache des Scharnier-Durchmessers D_{S} nicht überschreiten. Vorzugsweise wird der Scharnier-Durchmesser kleiner als 10 mm gewählt.

Die Seitenteile 8 und 9 eines Wärmedämmelements 3 sind Kopfseiten, deren Seitenkanten keine Anbindungen an die Lenkseitenflächen haben, um die Pendelmöglichkeit dieser Flächen nicht zu behindern. Weiterhin ist das Spiel im Scharnier an den Kopfseiten größer als an den anderen Seiten (Ober-, Unter- und Längsseite) gewählt, um dem unterschiedlichen Pendelbetrag der verschiedenen Seiten Rechnung zu tragen.

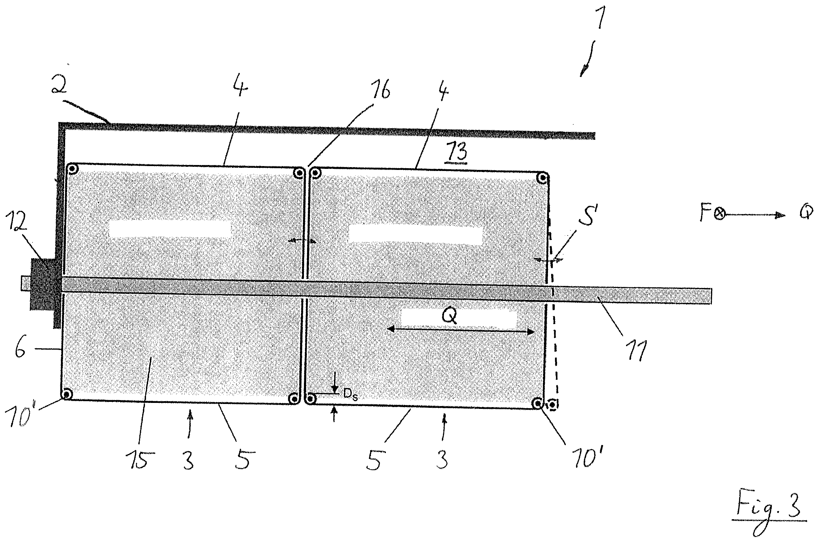

In Fig. 3 ist ein Ausführungsbeispiel zu sehen, bei dem die Wärmedämmvorrichtung 1 mit zwei Wärmedämmelementen 3 angedeutet ist. Die beiden Wärmedämmelemente 3 stellen Dämmkassetten dar, die im Schnitt senkrecht zur Förderrichtung F zu sehen sind. Die Fixierung der Wärmedämmelemente 3 an der Tragkonstruktion, d.h. am Trägerelement 2, erfolgt hier über mindestens eine Stange 11, die mittels Befestigungselementen in Form von Schrauben 12 außen am Trägerelement 2 befestigt sind; das Trägerelement 2 ist hier im Schnitt senkrecht zur Fördererrichtung F U-förmig ausgeführt. Die Membranbleche (Seitenteile) sind hier jeweils an allen vier Seiten mit scharnierartigen Verbindungen 10' versehen, um die freie Ausdehnung und Pendelmöglichkeit der Seitenflächen zu gewährleisten. Besagte Pendel- bzw. Schwenkbewegung ist in Fig. 3 mit S markiert. Die Ausdehnungsmöglichkeit des Membranblechs 5 ist angedeutet. Demgemäß bildet ein hochtemperaturfester gerader Draht als Seele des Scharniers 10' den Zusammenhalt der einzelnen Seitenteile 4, 5, 6, 7. Der Durchmesser D_{S} des Scharniers ist als Außendurchmesser des gebogenen Scharnier-Blechs zu verstehen.

Ausreichend Spiel lässt im Scharnier eine Bewegung in allen Richtungen zu. Zwischen zwei Wärmedämmelementen 3 ist eine Dehnfuge 16 in Richtung Q vorgesehen.

Sollte ein der Bramme bzw. dem Blech zugewandtes Seitenteil (Seitenteil 5) beschädigt sein, so kann durch Drehen des Wärmedämmelements 3 bei einem Wartungsstillstand das gegenüberliegende Seitenteil 4 der Heißseite zugewendet werden. Eine eventuelle Deformation der Membrane auf der zuvor verwendeten Seite findet im gedrehten Zustand Platz im Spalt 13 zwischen dem Wärmedämmelement 3 und dem Trägerelement 2. Dieser Spalt 13 liegt vorzugsweise zwischen 0 und 30 mm. Der Spalt kann alternativ auch mit weicher, leicht deformiebarer Dämmwolle gefüllt sein. Das Dämm-Material 15 (Keramikfasern) innerhalb der Kassette, d. h. innerhalb des Wärmedämmelements 3, wird so angeordnet, dass eine unnötige störende Druckbelastung auf die Membrane der Heißseite vermieden wird, siehe hierzu Fig. 3. In vorteilhafter Weise stützen sich die Keramikfasern im Bereich der Scharniere 10', des wendelförmigen Drahtes 10" (in Fig. 3 nicht dargestellt) und/oder der Stange 11 ab. Je nach Bedarf können die Keramikdämmfasern in dem Wärmedämmelement 3 aus verschiedenen Materialien unterschiedlicher Festigkeit bestehen.

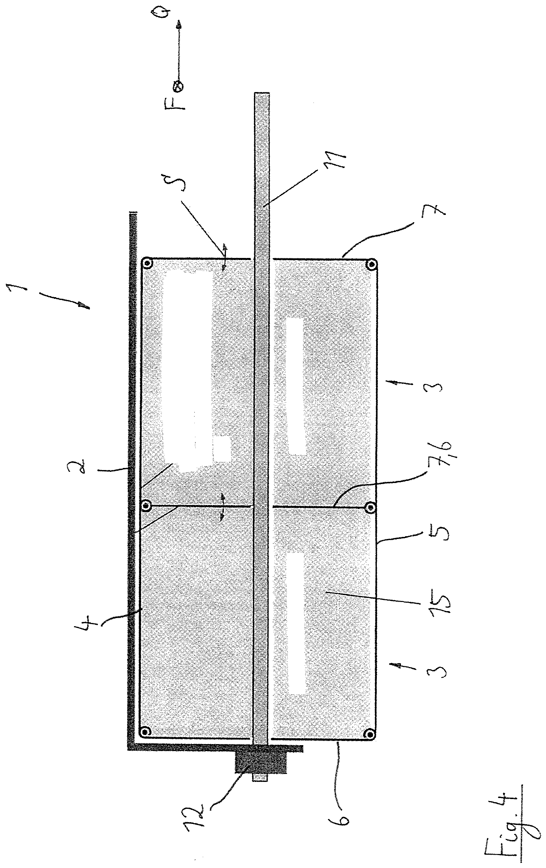

In Fig. 4 ist prinzipiell die gleiche Anordnung wie in Fig. 3 dargestellt. Hier allerdings werden alternativ zwei benachbarte Kassetten (Wärmedämmelemente 3) seitlich nur von einem gemeinsamen pendelfähigen Seitenteil getrennt und damit die Verbindung zwischen den Oberseiten und Unterseiten der benachbarten Kassetten hergestellt. Alternativ ist hier die Ausführung der Wärmedämmelemente 3 so, dass das relativ feste Dämm-Material 15 beispielsweise oben das Wärmedämmelement 3 trägt und sich an der Stange 11 abstützt.

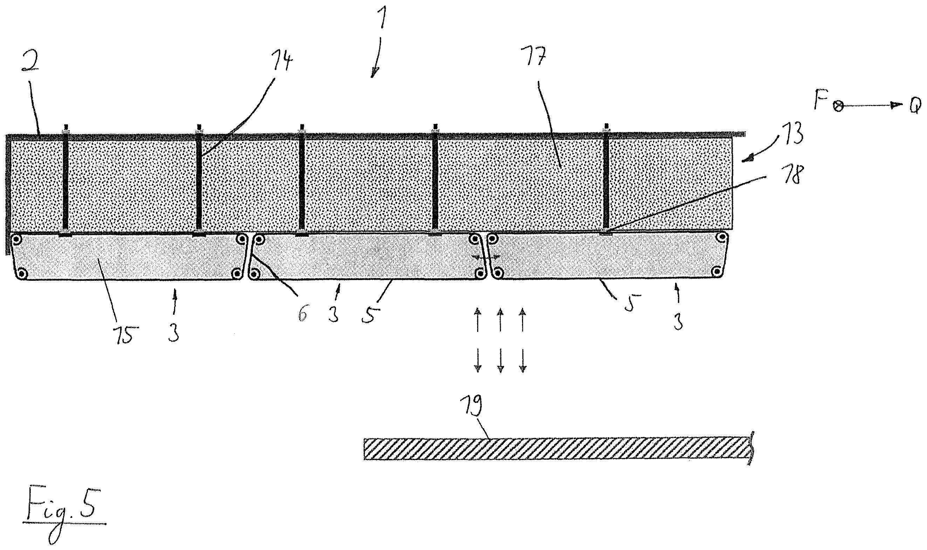

In Fig. 5 ist eine Kombination eines Wärmedämmelements 3 mit den zuvor erwähnten Eigenschaften dargestellt, d.h. bestehend aus der Dämmkassette (Wärmedämmelement 3) mit hochtemperaturbeständigen Membranblechen (Seitenteilen) und einer pendelnden flexiblen Anbindung der Membranseiten sowie einer am Trägerelement 2 fest angebrachten Niedertemperaturdämmung 17 (z. B. bioverträgliche Keramikfasern). Hier wird der Anteil des teuren hochtemperaturbeständigen Membranblechs 4, 5, 6, 7, 8, 9 und der Hochtemperaturkeramik minimiert. Die einzelnen Wärmedämmelemente 3 werden beispielsweise mittels Abstandsbolzen 14 oder ähnlichen Verbindungselementen an dem Trägerelement 2 befestigt und sind individuell austauschbar. Die Abstandsbolzen 14 werden an dem "Kaltseitenblech" beispielsweise angeschraubt oder verschweißt, siehe Befestigungsmittel 18. Der Füllgrad des Dämmmaterials ist so bemessen, dass die Pendelbewegung nicht negativ behindert und die dem Band bzw. der Bramme 19 zugewandte Metallmembrane nur minimal oder gar nicht belastet wird.

Fig. 5 zeigt als Beispiel Wärmedämmelemente 3 mit im Schnitt trapezförmiger Kontur.

Die oben erläuterten Konstruktionen der Wärmedämmvorrichtung sind im Zusammenhang mit der Wärmedämmung der Oberseite des Bandes bzw. der Bramme beschrieben. Für die thermische Dämmung der Unterseite des Bandes bzw. der Bramme gilt eine analoge Konzeption nach denselben dargestellten Prinzipien.

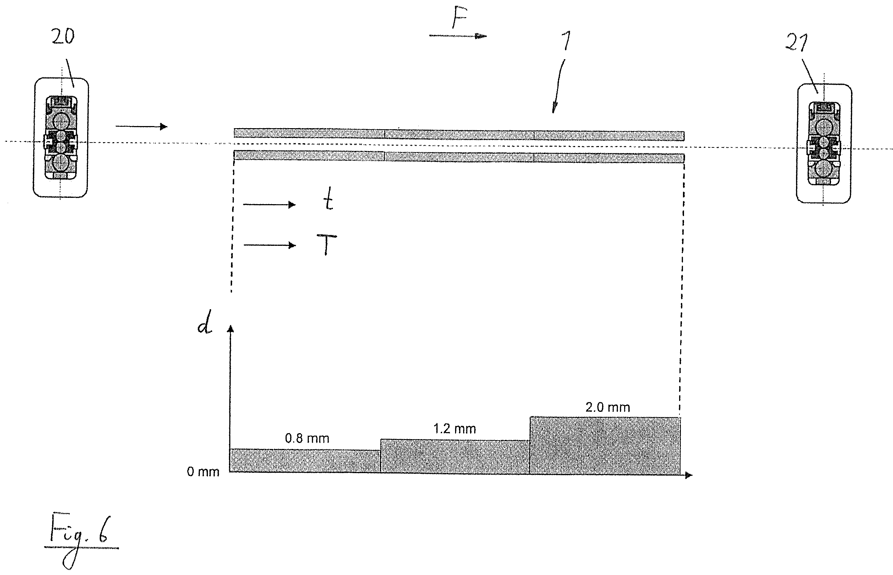

Innerhalb einer Walzanlage können die Wärmedämmhauben 1 mit unterschiedlichen Membranblechdicken d (s. Fig. 6) ausgeführt sein. Es ist technologisch sinnvoll, bei hoher thermischer Belastung, d.h. hoher zu erwartender Oberflächentemperatur der Membrane oder hoher Bandtemperatur kombiniert mit langer Heizdauer, die Membrane (Seitenteile) dicker auszuführen. Umgekehrt ist bei relativ kurzer Belastungszeit eine schnelle Erwärmung der Dämmhaube auf möglichst hohe Membrantemperatur wünschenswert. Hier sollte eine dünne Membrane eingesetzt werden. Im Sonderfall ist es auch vorteilhaft, auf eine Membrane zu verzichten und nur Keramikfasern einzusetzen. Die Membrandicke wird bevorzugt zwischen 0 und 4 mm ausgeführt.

In Fig. 6 ist in einem Ausführungsbeispiel eine sinnvolle Wahl unterschiedlicher Bereiche für die Membranblechdicke d zwischen Vor- und Fertigstraße dargestellt. Angedeutet sind das letzte Vorgerüst 20 der Vorstraße und das erste Fertiggerüst 21 der Fertigstraße. Dazwischen ist eine Wärmedämmvorrichtung 1 angeordnet.

Dicht vor der Fertigstraße verweilt also das Vorband relativ lange (Zeit t, nach rechts zunehmend); hier ist demgemäß ein dickeres Membranblech (Seitenteil) vorteilhaft. Hinter der Vorstraße ist die thermische Belastung (Temperatur T, nach rechts zunehmend) der Bleche kurz; hier ist demgemäß ein dünnes Membranblech (Seitenteil) vorteilhaft. Technologisch lässt sich so der Dämmeffekt bei einem optimalen Wartungsaufwand steigern.

Statt des Einsatzes eines dünnen Membranblechs oder einer Dämmhaube ohne Membranblech lässt sich auch eine Spiegel-Dämmhaube (hier wird die Wärmestrahlung reflektiert und der Dämmeffekt wirkt unmittelbar) mit Dämmelementen mit Membranblechen größerer Blechdicke innerhalb einer Anlage vorteilhaft kombinieren.

Der beschriebene Aufbau ist natürlich nicht auf das Anwendungsbeispiel gemäß Fig. 6 beschränkt, sondern es ist auch auf andere Anlagenausführungen sowie auf andere Aggregate (Gerüst, Schere etc.) zwischen den verschiedenen Dämmhaubenarten bzw. Membranblechdicken übertragbar.

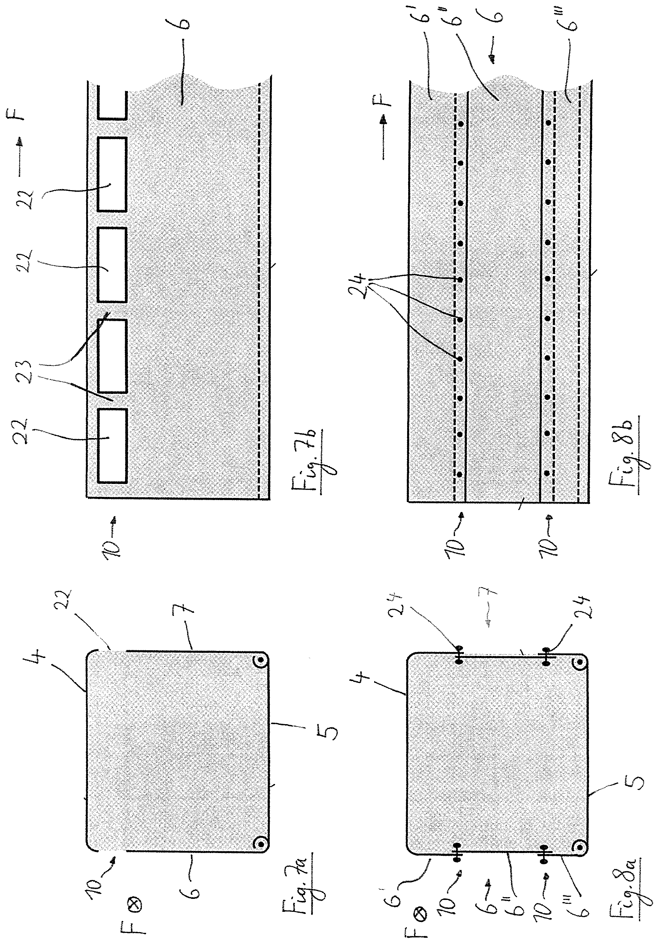

In den Figuren 7 und 8 sind zwei weitere Ausführungsbeispiele der Erfindung zu sehen, aus denen ersichtlich ist, wie die scharnierartige Verbindung 10 hergestellt werden kann.

In Figur 7 ist hierzu zu sehen, dass in die beiden Seitenteile 6 und 7 in deren oberen Bereich Ausnehmungen 22 eingearbeitet (zum Beispiel eingestanzt) sind, die so gefertigt sind, dass zwischen zwei Ausnehmungen 22 lediglich ein dünner Steg 23 stehen bleibt. Im Bereich des Übergangs des Seitenteils 6 zum Seitenteil 4 bzw. vom Seitenteil 7 zum Seitenteil 4 wird demgemäß im Beckenbereich eine scharnierartige Funktion geschaffen.

Eine scharnierartige Verbindung 10 kann also ebenfalls durch Schwächung der Längsseitenbleche des Wärmedämmelementes 3 durch Anbringen der besagten Aussparungen bzw. Ausnehmungen 22 erzielt werden. Hierdurch ist das Längsseitenblech leicht elastisch biegbar und wirkt - bezogen auf die Bedingungen an der Heißseite - wie ein Scharnier.

Eine andere mögliche Lösung zeigt Figur 8. Hier sind die Seitenteile 6 bzw. 7 nicht als durchgängige Bleche ausgebildet, sondern sie bestehen aus je 3 Seitenteilabschnitten 6', 6" und 6''' (analog auch das Seitenteil 7). Die Verbindungen 24 zwischen den einzelnen Seitenteilabschnitten, die relativ locker ausgebildet sein können, bewirken so eine mechanische Schwächung und den gewünschten Scharniereffekt.

Vorgesehen werden kann auch ein Seitenteilabschnitt 6", das als dünnes Zwischenblech ausgebildet ist (beispielsweise mit einer Dicke von 0,5 mm, während die anderen Seitenteile eine Dicke von beispielsweise 1,5 mm aufweisen) angebracht werden, was ebenfalls biegeelastisch wirkt. Die Zwischenbleche 6" können gezielt locker angebracht werden (mit Spiel im Verbindungselement 24), womit dann zusätzlich oder alternativ die gewünschte Beweglichkeit ermöglicht und so der Scharniereffekt erzeugt wird. Kombiniert man obige Maßnahmen, so verstärkt sich der scharnieräquivalente Effekt entsprechend.

Durch den zusätzlichen Einbau des bevorzugt wesentlich dünneren und damit biegeelastischeren Zwischenblechs 6" auf der Längsseite (mit einer deutlich dünneren Blechdicke als diejenige der benachbarten Seitenteile) kann also ein vergleichbarer Effekt erzeugt werden.

Die Verbindungselemente 24 in Figur 8 können wie erwähnt gezielt locker ausgebildet bzw. montiert sein, womit zusätzlich oder auch alternativ eine Beweglichkeit ermöglicht wird.

Die oben erläuterten Maßnahmen zur Herstellung einer Scharnierwirkung können auch kombiniert werden, so dass sich der scharnieräquivalente Effekt weiter verstärkt.

### Bezugszeichenliste:

- 1: Wärmedämmvorrichtung
- 2: Trägerelement
- 3: Wärmedämmelement
- 4: Seitenteil
- 5: Seitenteil
- 6: Seitenteil
- 6': Seitenteilabschnitt
- 6": Seitenteilabschnitt
- 6''': Seitenteilabschnitt
- 7: Seitenteil
- 8: Seitenteil
- 9: Seitenteil
- 10: scharnierartige Verbindung
- 10': Scharnier
- 10": wendelförmiger Draht
- 11: Stange
- 12: Befestigungselement (Schraube)
- 13: Spalt
- 14: Abstandsbolzen
- 15: Dämm-Material (Keramikfasern)
- 16: Dehnfuge
- 17: Niedertemperaturdämmung
- 18: Befestigungsmittel (Verschraubung / Verschweißung)
- 19: Warmband / Bramme
- 20: letztes Vorgerüst
- 21: erstes Fertiggerüst
- 22: Ausnehmung
- 23: Steg
- 24: Verbindung

- B: Breite eines Wärmedämmelements in Querrichtung Q
- L_{S}: Scharnier-Teillänge
- D_{S}: Scharnier-Durchmesser
- F: Förderrichtung
- Q: horizontale Richtung quer zur Förderrichtung
- S: Schwenkbewegung
- d: Membranblechdicke

## Patentansprüche

1. Wärmedämmvorrichtung (1) zur Wärmedämmung eines metallischen Guts in einem Walzwerk, umfassend ein Trägerelement (2), an dem eine Anzahl an Wärmedämmelementen (3) angeordnet ist,
wobei zumindest ein Wärmedämmelement (3) durch mehrere Seitenteile (4, 5, 6, 7, 8, 9) gebildet wird, die in sich einen Aufnahmeraum für ein Wärmedämmmaterial einschließen
**dadurch gekennzeichnet,**
**dass** zumindest zwei der Seitenteile (4, 5, 6, 7, 8, 9) an ihren zusammenstoßenden Seitenbereichen mit einer scharnierartigen Verbindung (10) miteinander verbunden sind.

2. Wärmedämmvorrichtung nach Anspruch 1, **dadurch gekennzeichnet, dass** die scharnierartige Verbindung (10) durch eine Anzahl an Scharnieren (10') gebildet wird, die entlang der zusammenstoßenden Seitenbereiche angeordnet sind.

3. Wärmedämmvorrichtung nach Anspruch 2, **dadurch gekennzeichnet, dass** eine Scharnier-Teillänge (L_{S}) maximal das 10-fache des Scharnier-Durchmessers (D_{S}) beträgt.

4. Wärmedämmvorrichtung nach Anspruch 1, **dadurch gekennzeichnet, dass** die scharnierartige Verbindung (10) durch mindestens einen wendelförmigen Draht (10") gebildet wird, der in Bohrungen eingefädelt ist, die entlang der zusammenstoßenden Seitenbereiche eingebracht sind.

5. Wärmedämmvorrichtung nach Anspruch 1, **dadurch gekennzeichnet, dass** die scharnierartige Verbindung (10) durch eine zumindest abschnittsweise Schwächung der mechanischen Steifigkeit, insbesondere der Biegesteifigkeit, zumindest eines Seitenteils (6, 7, 8, 9) gebildet wird.

6. Wärmedämmvorrichtung nach Anspruch 5, **dadurch gekennzeichnet, dass** die Schwächung durch mindestens eine Ausnehmung (22) im Seitenteil (6, 7) hergestellt ist.

7. Wärmedämmvorrichtung nach Anspruch 5, **dadurch gekennzeichnet, dass** die Schwächung durch das Zusammensetzen des Seitenteils (6, 7) durch mindestens zwei separate und miteinander verbundene Seitenteilabschnitte (6', 6", 6''') hergestellt ist.

8. Wärmedämmvorrichtung nach Anspruch 1, **dadurch gekennzeichnet, dass** die scharnierartige Verbindung (10) durch Abschnitte der Seitenbereiche und Ausnehmungen in den Seitenbereichen gebildet wird, wobei deformierte Abschnitte in Ausnehmungen im Bereich der zusammenstoßenden Seitenbereiche gesteckt sind.

9. Wärmedämmvorrichtung nach einem der Ansprüche 1 bis 8, **dadurch gekennzeichnet, dass** die Seitenteile (4, 5, 6, 7, 8, 9) durch Metallbleche gebildet werden.

10. Wärmedämmvorrichtung nach einem der Ansprüche 1 bis 9, **dadurch gekennzeichnet, dass** das Wärmedämmmaterial zumindest teilweise durch Keramikfasern gebildet wird.

11. Wärmedämmvorrichtung nach einem der Ansprüche 1 bis 10, **dadurch gekennzeichnet, dass** eine Anzahl von Wärmedämmelementen (3) sowohl in Richtung (Q) quer zur Förderrichtung (F) des metallischen Guts als auch in Förderrichtung (F) des metallischen Guts angeordnet sind.

12. Wärmedämmvorrichtung nach einem der Ansprüche 1 bis 11, **dadurch gekennzeichnet, dass** mindestens ein Wärmedämmelement (3) in Förderrichtung (F) des metallischen Guts gesehen eine quadratische, rechteckige oder trapezförmige Gestalt aufweist.

13. Wärmedämmvorrichtung nach einem der Ansprüche 1 bis 12, **dadurch gekennzeichnet, dass** mehrere in Richtung (Q) quer zur Förderrichtung (F) des metallischen Guts nebeneinander angeordnete Wärmedämmelemente (3) vorhanden sind, wobei mindestens zwei benachbarte Wärmedämmelemente (3) ein gemeinsames Seitenteil (6, 7) haben.

14. Wärmedämmvorrichtung nach einem der Ansprüche 1 bis 13, **dadurch gekennzeichnet, dass** mehrere in Richtung (Q) quer zur Förderrichtung (F) des metallischen Guts nebeneinander angeordnete Wärmedämmelemente (3) von mindestens einer Stange (11) durchsetzt werden.

15. Wärmedämmvorrichtung nach Anspruch 14, **dadurch gekennzeichnet, dass** die Stange (11) seitliche, sich in vertikaler Richtung erstreckende Abschnitte des Trägerelements (2) durchsetzt und hier mit Befestigungselementen (12), insbesondere mit Schrauben, befestigt ist.

16. Wärmedämmvorrichtung nach einem der Ansprüche 1 bis 15, **dadurch gekennzeichnet, dass** ein Spalt (13) in vertikaler Richtung zwischen den Wärmedämmelementen (3) und dem Trägerelement (2) vorhanden ist, der vorzugsweise maximal 30 mm breit ist.

17. Wärmedämmvorrichtung nach Anspruch 16, **dadurch gekennzeichnet, dass** bei Anordnung von Dämmwolle im Spalt (13) die Erstreckung des Spalts (13) in vertikaler Richtung maximal 100 mm beträgt.

18. Wärmedämmvorrichtung nach Anspruch 16 oder 17, **dadurch gekennzeichnet, dass** der Spalt (13) zumindest teilweise mit Dämmwolle ausgefüllt ist, vorzugsweise mit bioverträglichen Keramikfasern.

19. Wärmedämmvorrichtung nach einem der Ansprüche 16 bis 18, **dadurch gekennzeichnet, dass** der Spalt (13) in vertikaler Richtung von einer Anzahl Verbindungselemente, vorzugsweise Abstandsbolzen (14), durchsetzt ist, die am Trägerelement (2) und am Wärmedämmelement (3) befestigt sind.

20. Wärmedämmvorrichtung nach einem der Ansprüche 1 bis 19, **dadurch gekennzeichnet, dass** die Blechdicke der Seitenteile (4, 5, 6, 7, 8, 9) zumindest teilweise unterschiedlich sind, wobei insbesondere die sich in Förderrichtung (F) erstreckenden Seitenteile (4, 5, 6, 7) dicker sind als die Seitenteile (8, 9), auf denen die Förderrichtung (F) senkrecht steht.

21. Wärmedämmvorrichtung nach einem der Ansprüche 1 bis 20, **dadurch gekennzeichnet, dass** die Wärmedämmelemente (3) in Querrichtung (Q) zumindest teilweise unterschiedlich breit ausgebildet sind.

22. Wärmedämmvorrichtung nach einem der Ansprüche 1 bis 21, **dadurch gekennzeichnet, dass** in Förderrichtung (F) mindestens zwei Wärmedämmelemente (3) aufeinander folgend angeordnet sind, wobei die beiden in Förderrichtung (F) aufeinander folgenden Wärmedämmelemente (3) korrespondierende Seitenteile (4, 5, 6, 7, 8, 9) aufweisen, die unterschiedlich dick ausgebildet sind.

## Claims

1. Thermal insulating device (1) for thermal insulation of a metallic material in a rolling mill, comprising a support element (2) at which a number of thermal insulating elements (3) is arranged,
wherein at least one thermal insulating element (3) is formed by a plurality of side parts (4, 5, 6, 7, 8, 9) which in themselves enclose a receiving space for a thermal insulating material
**characterised in that**
at least two of the side parts (4, 5, 6, 7, 8, 9) are connected together at their abutting side regions by a hinge-like connection (10).

2. Thermal insulating device according to claim 1, **characterised in that** the hinge-like connection (10) is formed by a number of hinges (10') which are arranged along the abutting side regions.

3. Thermal insulating device according to claim 2, **characterised in that** a hinge sub-length (L_{S}) is at most 10 times the hinge diameter (D_{S}).

4. Thermal insulating device according to claim 1, **characterised in that** the hinge-like connection (10) is formed by at least one helical wire (10") threaded into bores which are formed along the abutting side regions.

5. Thermal insulating device according to claim 1, **characterised in that** the hinge-like connection (10) is formed by at least regional weakening of the mechanical stiffness, particularly the flexural stiffness, of at least one side part (6, 7, 8, 9).

6. Thermal insulating device according to claim 5, **characterised in that** the weakening is produced by at least one recess (22) in the side part (6, 7).

7. Thermal insulating device according to claim 5, **characterised in that** the weakening is produced by assembly of the side part (6, 7) from at least two separate side part sections (6', 6", 6''') connected together.

8. Thermal insulating device according to claim 1, **characterised in that** the hinge-like connection (10) is formed by sections of the side regions and recesses in the side regions, wherein deformed sections are plugged into recesses in the area of the abutting side regions.

9. Thermal insulating device according to any one of claims 1 to 8, **characterised in that** the side parts (4, 5, 6, 7, 8, 9) are formed by metal plates.

10. Thermal insulating device according to any one of claims 1 to 9, **characterised in that** the thermal insulating material is formed at least partly by ceramic fibres.

11. Thermal insulating device according to any one of claims 1 to 10, **characterised in that** a number of thermal insulating elements (3) is arranged in a direction (Q) transverse to the conveying direction (F) of the metallic material and also in the conveying direction (F) of the metallic material.

12. Thermal insulating device according to any one of claims 1 to 11, **characterised in that** at least one thermal insulating element (3) has a square, rectangular or trapezium-shaped form as seen in conveying direction (F) of the metallic material.

13. Thermal insulating device according to any one of claims 1 to 12, **characterised in that** a plurality of thermal insulating elements (3) arranged adjacent to one another in a direction (Q) transverse to the conveying direction (F) of the metallic material is present, wherein at least two adjacent thermal insulating elements (3) have a common side part (6, 7).

14. Thermal insulating device according to any one of claims 1 to 13, **characterised in that** several thermal insulating elements (3) arranged adjacent to one another in a direction (Q) transverse to the conveying direction (F) of the metallic material are penetrated by at least one rod (11).

15. Thermal insulating device according to claim 14, **characterised in that** the rod (11) laterally penetrates sections, which extend in vertical direction, of the support element (2) and is secured thereat by fastening elements (12), particularly by screws.

16. Thermal insulating device according to any one of claims 1 to 15, **characterised in that** a gap (13), which preferably has a maximum width of 30 millimetres, is present in vertical direction between the thermal insulating elements (3) and the support element (2).

17. Thermal insulating device according to claim 16, **characterised in that** in the case of arrangement of insulating wool in the gap (13) the dimension of the gap (13) in vertical direction is at most 100 millimetres.

18. Thermal insulating device according to claim 16 or 17, **characterised in that** the gap (13) is at least partly filled with insulating wool, preferably with bio-compatible ceramic fibres.

19. Thermal insulating device according to any one of claims 16 to 18, **characterised in that** the gap (13) is penetrated in vertical direction by a number of connecting elements, preferably spacer bolts (14), which are secured to the support element (2) and to the thermal insulating element (3).

20. Thermal insulating device according to any one of claims 1 to 19, **characterised in that** the plate thicknesses of the side parts (4, 5, 6, 7, 8, 9) differ at least in part, wherein, in particular, the side parts (4, 5, 6, 7) extending in conveying direction (F) are thicker than the side parts (8, 9) perpendicular to the conveying direction (F).

21. Thermal insulating device according to any one of claims 1 to 20, **characterised in that** the thermal insulating elements (3) are formed to be of different width at least in part in transverse direction (Q).

22. Thermal insulating device according to any one of claims 1 to 21, **characterised in that** at least two thermal insulating elements (3) are arranged in succession in conveying direction (F), wherein the two thermal insulating elements (3) successive in conveying direction (F) have corresponding side parts (4, 5, 6, 7, 8, 9) formed to be of different thickness.

## Revendications

1. Dispositif procurant une isolation thermique (1) destiné à l'isolation thermique d'un produit métallique dans un laminoir, comprenant un élément (2) faisant office de support, contre lequel sont disposés un certain nombre d'éléments (3) procurant une isolation thermique ;
dans lequel au moins un élément (3) procurant une isolation thermique est réalisé par l'intermédiaire de plusieurs parties latérales (4, 5, 6, 7, 8, 9) qui renferment un espace de réception pour une matière procurant une isolation thermique ;
**caractérisé**
**en ce qu'**au moins deux des parties latérales (4, 5, 6, 7, 8, 9) sont reliées l'une à l'autre, contre leurs zones latérales destinées à entrer en contact réciproque, avec une liaison (10) en forme de charnière.

2. Dispositif procurant une isolation thermique selon la revendication 1, **caractérisé en ce que** la liaison (10) en forme de charnière est réalisée par l'intermédiaire d'un certain nombre de charnières (10') qui sont disposées le long des zones latérales destinées à entrer en contact réciproque.

3. Dispositif procurant une isolation thermique selon la revendication 2, **caractérisé en ce qu'**une longueur partielle (Lₛ) de charnière représente au maximum 10 fois le diamètre (Dₛ) de la charnière.

4. Dispositif procurant une isolation thermique selon la revendication 1, **caractérisé en ce que** la liaison (10) en forme de charnière est réalisée par l'intermédiaire d'au moins un fil métallique (10") disposé en spirale qui est enfilé dans des alésages qui sont incorporés le long des zones latérales destinées à entrer en contact réciproque.

5. Dispositif procurant une isolation thermique selon la revendication 1, **caractérisé en ce que** la liaison (10) en forme de charnière est réalisée par l'intermédiaire d'un affaiblissement de la rigidité mécanique au moins par tronçons, en particulier de la résistance à la flexion, au moins d'une partie latérale (6, 7, 8, 9).

6. Dispositif procurant une isolation thermique selon la revendication 5, **caractérisé en ce que** l'affaiblissement est obtenu au moyen d'un évidement (22) dans la partie latérale (6, 7).

7. Dispositif procurant une isolation thermique selon la revendication 5, **caractérisé en ce que** l'affaiblissement est obtenu par l'intermédiaire de l'assemblage de la partie latérale (6, 7) à partir d'au moins deux tronçons de parties latérales (6', 6", 6''') séparés et reliés l'un à l'autre.

8. Dispositif procurant une isolation thermique selon la revendication 1, **caractérisé en ce que** la liaison (10) en forme de charnière est réalisée par l'intermédiaire de tronçons des zones latérales et d'évidements dans les zones latérales ; dans lequel des tronçons déformés sont incorporés dans des évidements au niveau des zones partielles destinées à entrer en contact réciproque.

9. Dispositif procurant une isolation thermique selon l'une quelconque des revendications 1 à 8, **caractérisé en ce que** les parties latérales (4, 5, 6, 7, 8, 9) sont réalisées par l'intermédiaire de tôles métalliques.

10. Dispositif procurant une isolation thermique selon l'une quelconque des revendications 1 à 9, **caractérisé en ce que** la matière procurant une isolation thermique est réalisée au moins en partie par l'intermédiaire de fibres en céramique.

11. Dispositif procurant une isolation thermique selon l'une quelconque des revendications 1 à 10, **caractérisé en ce qu'**un certain nombre d'éléments (3) procurant une isolation thermique sont disposés aussi bien dans une direction (Q) transversale par rapport à la direction de transport (F) du produit métallique que dans la direction de transport (F) du produit métallique.

12. Dispositif procurant une isolation thermique selon l'une quelconque des revendications 1 à 11, **caractérisé en ce qu'**au moins un élément (3) procurant une isolation thermique présente, lorsqu'on regarde dans la direction de transport (F) du produit métallique, une configuration de forme carrée, de forme rectangulaire ou de forme trapézoïdale.

13. Dispositif procurant une isolation thermique selon l'une quelconque des revendications 1 à 12, **caractérisé en ce que** sont présents plusieurs éléments (3) procurant une isolation thermique disposés les uns à côté des autres dans une direction (Q) transversale par rapport à la direction de transport (F) du produit métallique ; dans lequel au moins deux éléments voisins (3) procurant une isolation thermique possèdent une partie latérale commune (6, 7).

14. Dispositif procurant une isolation thermique selon l'une quelconque des revendications 1 à 13, **caractérisé en ce que** plusieurs éléments (3) procurant une isolation thermique disposés les uns à côté des autres dans une direction (Q) transversale par rapport à la direction de transport (F) du produit métallique sont traversés par au moins une barre (11).

15. Dispositif procurant une isolation thermique selon la revendication 14, **caractérisé en ce que** la barre (11) traverse des tronçons latéraux de l'élément (2) faisant office de support, s'étendant en direction verticale, et en l'occurrence est fixée avec des éléments de fixation (12), en particulier avec des vis.

16. Dispositif procurant une isolation thermique selon l'une quelconque des revendications 1 à 15, **caractérisé en ce qu'**on prévoit une fente (13) en direction verticale entre les éléments (3) procurant une isolation thermique et l'élément (2) faisant office de support, qui possède une largeur de préférence maximale de 30 mm.

17. Dispositif procurant une isolation thermique selon la revendication 16, **caractérisé en ce que**, dans le cas d'un agencement de laine isolante dans la fente (13), l'étendue de la fente (13) en direction verticale s'élève au maximum à 100 m.

18. Dispositif procurant une isolation thermique selon la revendication 16 ou 17, **caractérisé en ce que** la fente (13) est remplie au moins en partie avec de la laine isolante, de préférence avec des fibres biocompatibles en céramique.

19. Dispositif procurant une isolation thermique selon l'une quelconque des revendications 16 à 18, **caractérisé en ce que** la fente (13) est traversée, en direction verticale, par un certain nombre d'éléments de liaison, de préférence par des boulons d'écartement (14), qui sont fixés à l'élément (2) faisant office de support et à l'élément (3) procurant une isolation thermique.

20. Dispositif procurant une isolation thermique selon l'une quelconque des revendications 1 à 19, **caractérisé en ce que** les épaisseurs de tôle des parties latérales (4, 5, 6, 7, 8, 9) sont différentes au moins en partie ; dans lequel en particulier les parties latérales (4, 5, 6, 7) qui s'étendent dans la direction de transport (F) sont plus épaisses que les parties latérales (8, 9) par rapport auxquelles la direction de transport (F) est verticale.

21. Dispositif procurant une isolation thermique selon l'une quelconque des revendications 1 à 20, **caractérisé en ce que** les éléments (3) procurant une isolation thermique sont réalisés de manière à posséder une largeur au moins en partie différente dans la direction transversale (Q).

22. Dispositif procurant une isolation thermique selon l'une quelconque des revendications 1 à 21, **caractérisé en ce qu'**au moins deux éléments (3) procurant une isolation thermique sont disposés en se suivant l'un l'autre dans la direction de transport (F) ; dans lequel les deux éléments (3) qui se suivent l'un l'autre dans la direction de transport (F) présentent des parties latérales correspondantes (4, 5, 6, 7, 8, 9) qui sont réalisées de manière posséder des épaisseurs différentes.
